# EUROPEAN PATENT APPLICATION

(11) **EP 3 471 015 A1**
(43) Date of publication of application: **17.04.2019**
(21) Application number: 18189320.7
(22) Date of filing: 16.08.2018
(51) Int. Cl.: G06K 9/00, G06K 9/22

(54) **FACE RECOGNITION METHOD AND RELATED PRODUCT**

(30) Priority: 11.10.2017 CN 201710941830
(71) Applicant: Guangdong OPPO Mobile Telecommunications Corp., Ltd., Dongguan, Guangdong 523860 (CN)
(72) Inventor: ZHOU, Haitao, Dongguan, Guangdong 523860 (CN); WANG, Lizhong, Dongguan, Guangdong 523860 (CN); GUO, Ziqing, Dongguan, Guangdong 523860 (CN); WANG, Jian, Dongguan, Guangdong 523860 (CN); JIANG, Kui, Dongguan, Guangdong 523860 (CN); HUI, Fangfang, Dongguan, Guangdong 523860 (CN)
(74) Representative: advotec.

(57) **Abstract**

A face recognition method and related products are provided. The method includes: acquiring (S201) face feature data of a face image of a current user via the face recognition service in response to detecting a face recognition request for a target event; sending (S202, S304) the face feature data to the face recognition trusted application via the face recognition service; matching (S203, S305, S410) the face feature data with a face template in a face template set of the security system via the face recognition trusted application so as to generate a matching result; and processing (S204, S306, S411) the target event according to the matching result.

## Description

### FIELD

The present disclosure relates to mobile terminal technologies, and more particularly to a face recognition method and related products.

### BACKGROUND

With popularization of the smart phone, more and more applications are supported by the smart phone, functions of the smart phone become increasingly powerful, and the smart phone is developed towards diversification and individuation, such that the smart phone becomes an essential electronic equipment in user's life.

At present, with higher and higher security requirements of the smart phone, various of unlocking methods with biological information are generated, for example, unlocking method with fingerprint, unlocking method with face, unlocking method with iris etc.. Since the unlocking method with face has a fast speed and a high success rate for unlocking, the unlocking method with face becomes the primary choice of the smart phone.

### DISCLOSURE

Embodiments of the present disclosure provide a face recognition method and related products.

Embodiments of the present disclosure provide a mobile terminal. An operating system and a security system are running in the mobile terminal. A face recognition service running in the operating system and a face recognition trusted application running in the security system. The mobile terminal includes a processor, a face image collection device and a memory coupled to the processor. The face image collection device is configured to collect a face image of a current user. The memory is configured to store a face template set of the security system. The processor is configured to perform following operations: acquiring, via the face recognition service, face feature data of a face image of a current user in response to detecting a face recognition request for a target event; sending, via the face recognition service, the face feature data to the face recognition trusted application; matching, via the face recognition trusted application, the face feature data with a face template in the face template set so as to generate a matching result; and processing the target event according to the matching result.

In an embodiment, acquiring the face feature data of the face image via the face recognition service includes: controlling, via the face recognition service, a camera to collect the face image of the current user; determining the collected face image is a real face image of the current user; and extracting, via the face recognition service, the face feature data of the real face image of the current user.

In an embodiment, determining the collected face image is a real face image of the current user, the processor includes: controlling a flashlight of the mobile terminal to turn on; continuously collecting a plurality of reference face images of the current user in a predetermined time period after the flashlight is turned on; and determining the collected face image is a real face image of the current user according to the plurality of reference face images.

In an embodiment, determining the collected face image is a real face image of the current user according to the plurality of reference face images includes: determining a distance between an upper eyelid and a lower eyelid of an eye in each reference face image; determining a stress change trend of the eye of the current user according to the distance between the upper eyelid and the lower eyelid of the eye in each reference face image; and determining the collected face image is a real face image of the current user when the stress change trend satisfies a predetermined trend.

In an embodiment, the predetermined trend includes a trend of squint or a trend of closing eyes.

In an embodiment, sending the face feature data to the face recognition trusted application via the face recognition service includes: sending, via the face recognition service, a communication authorization request to the face recognition trusted application; receiving, via the face recognition trusted application, the communication authorization request; generating an authorization factor in response to querying that a predetermined service set includes the face recognition service; sending a communication authorization command carrying the authorization factor to the face recognition service, in which the authorization factor is configured to verify validity of communication between the face recognition service and the face recognition trusted application; and sending, via the face recognition service, a data package carrying the authorization factor and the face feature data to the face recognition trusted application.

In an embodiment, the operating system corresponds to a rich execution environment, and the security system corresponds to a trust execution environment.

Embodiments of the present disclosure provide a face recognition method applicable to a mobile terminal. An operating system and a security system are running in the mobile terminal. Face recognition service running in the operating system and a face recognition trusted application running in the security system. The method includes: acquiring, via the face recognition service, face feature data of a face image of a current user in response to detecting a face recognition request for a target event; sending, via the face recognition service, the face feature data to the face recognition trusted application; matching, via the face recognition trusted application, the face feature data with a face template in a face template set of the security system so as to generate a matching result; and processing the target event according to the matching result.

In an embodiment, acquiring, via the face recognition service, the face feature data of the face image of the current user includes: controlling, via the face recognition service, a camera to collect the face image of the current user; determining the collected face image is a real face image of the current user; and extracting, via the face recognition service, the face feature data of the real face image of the current user.

In an embodiment, determining the collected face image is a real face image of the current user includes: controlling a flashlight of the mobile terminal to turn on; continuously collecting a plurality of reference face images of the current user in a predetermined time period after the flashlight is turned on; and determining the collected face image is real face image of the current user according to the plurality of reference face images.

In an embodiment, determining the collected face image as the real face image of the current user according to the plurality of reference face images includes: determining a distance between an upper eyelid and a lower eyelid of an eye in each reference face image; determining a stress change trend of the eye of the current user according to the distance between the upper eyelid and the lower eyelid of the eye in each reference face image; and determining the collected face image is a real face image of the current user in response to determining that the stress change trend satisfies a predetermined trend.

In an embodiment, the predetermined trend includes a trend of squint or a trend of closing eyes.

In an embodiment, sending, via the face recognition service, the face feature data to the face recognition trusted application includes: sending, via the face recognition service, a communication authorization request to the face recognition trusted application; receiving, via the face recognition trusted application, the communication authorization request; generating an authorization factor in response to querying that a predetermined service set includes the face recognition service; sending a communication authorization command carrying the authorization factor to the face recognition service, wherein the authorization factor is configured to verify validity of communication between the face recognition service and the face recognition trusted application; and sending, via the face recognition service, a data package carrying the authorization factor and the face feature data to the face recognition trusted application.

In an embodiment, the operating system corresponds to a rich execution environment, and the security system corresponds to a trust execution environment.

Embodiments of the present disclosure provide a non-transitory computer-readable storage medium, having a computer program for electronic data exchange stored thereon. The computer program causes a computer to perform all or a part of the acts in the method described above. The computer comprises a mobile terminal.

### BRIEF DESCRIPTION OF THE DRAWINGS

To illustrate the solutions according to the embodiments of the present disclosure or in the prior art more clearly, accompanying drawings needed for describing the embodiments or the prior art are briefly introduced below. Obviously, the accompanying drawings in the following descriptions are merely some embodiments of the present disclosure, and persons of ordinary skill in the art may obtain other drawings according to the accompanying drawings without making creative efforts.
Fig. 1 is a schematic diagram of a mobile terminal according to an embodiment of the present disclosure.
Fig. 2A is a flow chart of a face recognition method according to an embodiment of the present disclosure.
Fig. 2B is a schematic diagram of a system architecture of an operating system and a security system according to an embodiment of the present disclosure.
Fig. 3 is a flow chart of a face recognition method according to another embodiment of the present disclosure.
Fig. 4 is a flow chart of a face recognition method according to a still embodiment of the present disclosure.
Fig. 5 is a block diagram of a mobile terminal according to an embodiment of the present disclosure.
Fig. 6 is a block diagram of functional components in a mobile terminal according to an embodiment of the present disclosure.

### EMBODIMENTS OF THE PRESENT DISCLOSURE

The solutions of the embodiments of the present disclosure are clearly and completely described below with reference to the accompanying drawings in the embodiments of the present disclosure. Obviously, the described embodiments are merely part of rather than all of the embodiments of the present disclosure. All other embodiments obtained by persons of ordinary skill in the art based on the embodiments of the present disclosure without making creative efforts shall fall within the protection scope of the present disclosure.

In addition, terms such as "first" and "second" are used herein for purposes of description and are not intended to indicate or imply relative importance or significance. As used herein, the terms "comprises," "includes," or any other variation thereof, refer to a non-exclusive inclusion. For example, a process, method, article, or apparatus that comprises a given list of elements is not necessarily limited to only those elements given, but may further include other elements not expressly listed or inherent to such process, method, article, or apparatus.

Reference throughout this specification to "embodiment," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or separated or alternative embodiment of the present disclosure. Furthermore, the particular features, structures, materials, or characteristics may be combined in any suitable manner in one or more embodiments or examples.

The mobile terminal involved in embodiments of the present disclosure may include a handheld device, a vehicle-mounted device, a wearable device and a computing device having wireless communication function, or another processing device coupled to a wireless modem, a user equipment (UE) in a variety of forms, a mobile station (MS) and a terminal device and the like. For ease of description, the devices mentioned above are collectively called as mobile terminal.

The mobile terminal involved in embodiments of the present disclosure is provided with a face image collection device, which may be a general camera assembly, for example, a front camera. Embodiments of the present disclosure will be described in the followings.

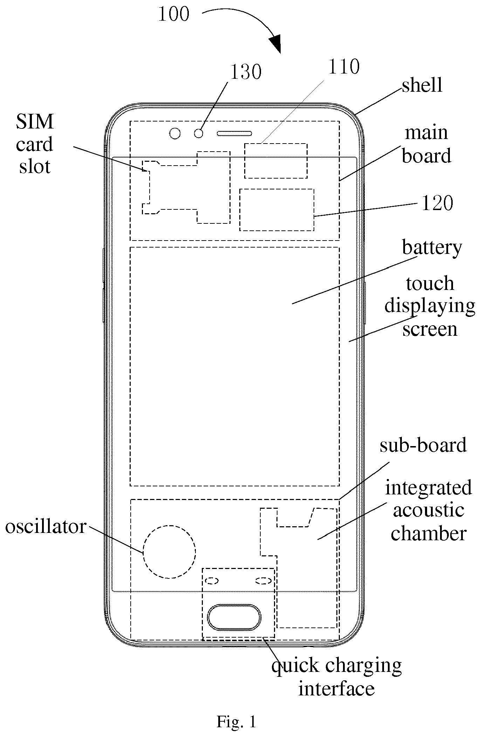

Referring to Fig. 1, Fig. 1 is a schematic diagram of a mobile terminal 100 according to an embodiment of the present disclosure. The mobile terminal 100 includes a shell, a touch displaying screen, a main board, a battery, and a sub-board. The main board is provided with a processor 110, a memory 120, a front camera 130, a SIM card slot and the like. The sub-board is provided with an oscillator, an integrated acoustic chamber, a VOOC quick charging interface. The front camera 130 forms a face image collection device of the mobile terminal 100. The face image collection device may include a camera.

The face image collection device 130 is configured to collect a face image of a current user. The face image can be used to extract face feature data.

The memory 120 is configured to store a face template set of the security system.

The processor 110 is configured to acquire face feature data of a face image of a current user via a face recognition service in response to detecting a face recognition request for a target event, to send the face feature data to a face recognition trusted application via the face recognition service, to match the face feature data with a face template in the face template set via the face recognition trusted application so as to generate a matching result, and to process the target event according to the matching result.

The processor 110 is a control center of the mobile terminal, which can use various interfaces and wires to couple respective parts of the mobile terminal, and perform various functions and processing data of the mobile terminal by running or executing software programs and/or modules stored in the memory 120 and calling data stored in the memory 120, so as to monitor the mobile terminal overall. In an embodiment, the processor 110 may integrate an application processor and a modem processor, in which the application processor is mainly configured to process the operating system, the user interface and applications, and the modem processor is mainly configured to process wireless communication. It could be understood that the above-described modem processor may be not integrated in the processor 110.

The memory 120 may be configured to store a software program and modules. The processor 110 runs the software program and modules stored in the memory 120, to implement various functional applications and data processes of the mobile terminal. The memory 120 may mainly include a program storage area and a data storage area. The program storage area may store an operating system, an application program required by at least one function and the like. The data storage area may store data created according to usage of the mobile phone, and the like. In addition, the memory 120 may include a high speed random access memory, and may also include a non-volatile memory such as at least one magnetic disk storage device, a flash memory, or another volatile solid-state storage device.

In embodiments of the present disclosure, the mobile terminal acquires face feature data of a face image of a current user via face recognition service in response to detecting a face recognition request for a target event, sends the face feature data to a face recognition trusted application via the face recognition service, matches the face feature data with a face template in a face template set of a security system via the face recognition trusted application to generate a matching result and processes the target event according to the matching result. Since running environment of the face recognition trusted application in the security system has higher security relative to face recognition service in an operating system, such as Android system, the matching process of face feature data is realized by the face recognition trusted application, such that situations in which the matching result is tampered during the matching process performed by the face recognition service of the operating system or data such as a face template is stolen can be avoided, thereby improving security of face recognition of the mobile terminal.

In a possible embodiment, when acquiring the face feature data of the face image of the current user via the face recognition service, the processor 110 is configured to: control a camera to collect the face image of the current user via the face recognition service; determine the collected face image is a real face image of the current user; and extract face feature data of the real face image of the current user via the face recognition service.

In a possible embodiment, when determining the collected face image is a real face image of the current user, the processor 110 is configured to: control a flashlight of the mobile terminal to turn on and continuously collect a plurality of reference face images of the current user in a predetermined time period after the flashlight is turned on; and determine the collected face image is a real face image of the current user according to the plurality of reference face images.

In a possible embodiment, when determining the collected face image is a real face image of the current user according to the plurality of reference face images, the processor 110 is configured to: determine a distance between an upper eyelid and a lower eyelid of an eye in each reference face image; determine a stress change trend of an eye of the current user according to the distance between the upper eyelid and the lower eyelid of the eye in each reference face image; and determine the collected face image is a real face image of the current user in response to determining that the stress change trend satisfies a predetermined trend.

In a possible embodiment, when sending the face feature data to the face recognition trusted application via the face recognition service, the processor 110 is configured to: send a communication authorization request to the face recognition trusted application via the face recognition service; receive the communication authorization request via the face recognition trusted application, generate an authorization factor in response to querying that a predetermined service set includes the face recognition service, and send a communication authorization command carrying the authorization factor to the face recognition service, the authorization factor being configured to verify validity of communication between the face recognition service and the face recognition trusted application; and send a data package carrying the authorization factor and the face feature data to the face recognition trusted application via the face recognition service.

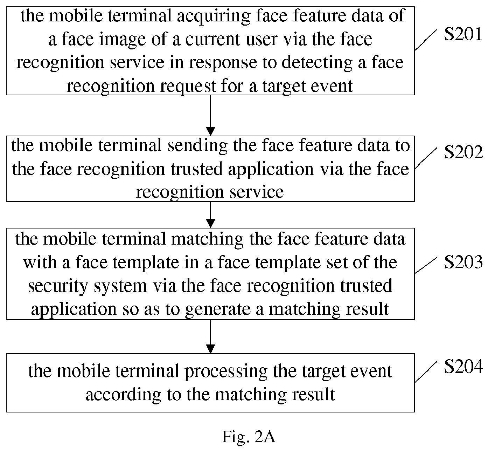

Referring to Fig. 2A, Fig. 2A is a flow chart of a face recognition method according to an embodiment of the present disclosure. The method is applicable to a mobile terminal. An operating system and a security system are running in the mobile terminal. Face recognition service is running in the operating system. A face recognition trusted application is running in the security system. The face recognition method includes the followings.

At block S201, the mobile terminal acquires face feature data of a face image of a current user via the face recognition service in response to detecting a face recognition request for a target event.

The target event, for example, may be an unlocking event or a payment event. The unlocking event, for example, may include a screen turning-off unlocking event, an application latching unlocking event, a file opening unlocking event etc. The payment event, for example, may include a large amount payment event, a small amount payment event, a quick/shortcut payment event etc. which are not limited herein.

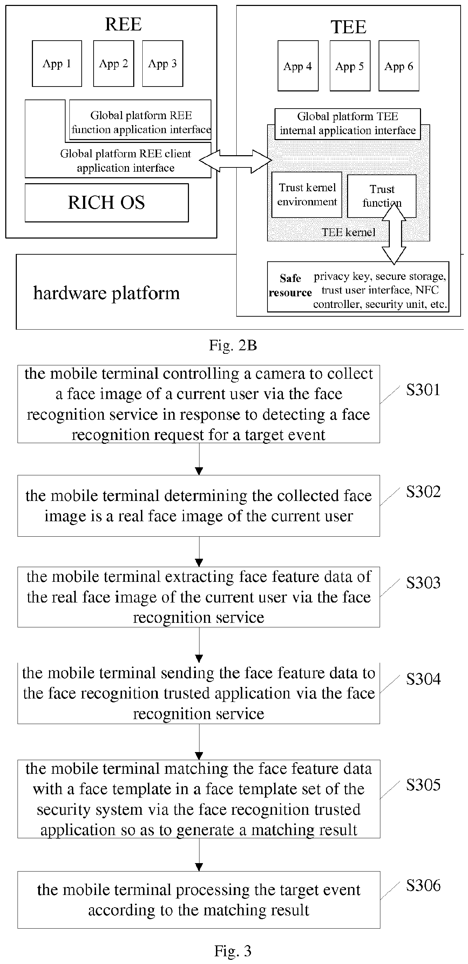

As illustrated in Fig. 2B, a rich execution environment (REE) and a trust execution environment (TEE) are running in the mobile terminal. For example REE corresponds to the operating system and TEE corresponds to the security system. TEE has its own execution space, which means that an operating system exists in TEE. TEE has a higher security level than Rich OS (general operating system). Software and hardware resource accessible to TEE is independent of Rich OS. TEE provides a security execution environment for a trust application TA, and further protects security, integrity and access authorization of resource and data of TA. In order to ensure root of trust of TEE, TEE needs to be verified and separated from an operating system during a security latching process. In TEE, each TA is independent from each other and can be access each other without authorization. The face recognition trusted application is a trust application supported in TEE corresponding to the security system of the mobile terminal.

At block S202, the mobile terminal sends the face feature data to the face recognition trusted application via the face recognition service.

At block S203, the mobile terminal matches the face feature data with a face template in a face template set of the security system via the face recognition trusted application so as to generate a matching result.

At block S204, the mobile terminal processes the target event according to the matching result.

In embodiments of the present disclosure, the mobile terminal acquires face feature data of a face image of a current user via face recognition service in response to detecting a face recognition request for a target event, sends the face feature data to a face recognition trusted application via the face recognition service, matches the face feature data with a face template in a face template set of a security system via the face recognition trusted application to generate a matching result and processes the target event according to the matching result. Since running environment of the face recognition trusted application in the security system has higher security relative to face recognition service in the operating system, the matching process of face feature data is realized by the face recognition trusted application, such that situations in which the matching result is tampered during the matching process performed by the face recognition service of the operating system or data such as a face template is stolen can be avoided, thereby improving security of face recognition of the mobile terminal.

In a possible embodiment, the mobile terminal acquiring the face feature data of the face image of the current user via the face recognition service includes: the mobile terminal controlling a camera to collect the face image of the current user via the face recognition service; determining the collected face image is a real face image of the current user; and extracting face feature data of the face image of the current user via the face recognition service.

In this embodiment, since the mobile terminal performs bioassay on the collected face image before extracting the face feature data and performs the feature data extraction in response to determining the collected face image is a real face image of the current user, the invalid face recognition using fake photos can be avoided, thereby improving security of face recognition of the mobile terminal.

In a possible embodiment, the mobile terminal determining the collected face image is a real face image of the current user includes: the mobile terminal controlling a flashlight of the mobile terminal to turn on and continuously collecting a plurality of reference face images of the current user in a predetermined time period after the flashlight is turned on; and determining the collected face image is a real face image of the current user according to the plurality of reference face images.

In this embodiment, since the flashlight motivates the stress response of human eyes, change in content of the images collected continuously by the mobile terminal occurs. However, in the invalid recognition using photos, there is no change in the content of the images collected continuously by the mobile terminal as the flashlight is turned on. Therefore, the face recognition of the real user can be recognized, which improves security of face recognition of the mobile terminal, is a

In a possible embodiment, the mobile terminal determining the collected face image is a real face image of the current user according to the plurality of reference face images includes: the mobile terminal determining a distance between an upper eyelid and a lower eyelid of an eye in each reference face image; determining a stress change trend of an eye of the current user according to the distance between the upper eyelid and the lower eyelid of the eye in each reference face image; and determining the collected face image is a real face image of the current user in response to determining that the stress change trend satisfies a predetermined trend.

The predetermined trend, for example, may be a trend of squint or a trend of closing eyes, which is not limited herein.

In this embodiment, the mobile terminal can actually recognize the face recognition of the real user by comparing the stress change trend with the predetermined trend, such that the security of face recognition can be improved.

In a possible embodiment, the mobile terminal sending the face feature data to the face recognition trusted application via the face recognition service includes: the mobile terminal sending a communication authorization request to the face recognition trusted application via the face recognition service; receiving the communication authorization request via the face recognition trusted application, generating an authorization factor in response to querying that a predetermined service set includes the face recognition service, sending a communication authorization command carrying the authorization factor to the face recognition service, in which the authorization factor is configured to verify validity of communication between the face recognition service and the face recognition trusted application; and sending a data package carrying the authorization factor and the face feature data to the face recognition trusted application via the face recognition service.

After receiving the data package, the face recognition trusted application verifies that the authorization factor in the data package is valid, and extracts the face feature data from the data package.

In this embodiment, since the authorization factor can effectively ensure security of communication between the face recognition service in the operating system and the face recognition trusted application in the security system, the security of face recognition of the mobile terminal can be improved.

Similar to embodiments illustrated in Fig. 2A, referring to Fig. 3, Fig. 3 is a flow chart of a face recognition method according to an embodiment of the present disclosure. The method is applicable to a mobile terminal. The mobile terminal runs an operating system and a security system. Face recognition service is running in the operating system, and a face recognition trusted application TA is running in the security system. As illustrated in Fig. 3, the method includes the followings.

At block S301, the mobile terminal controls a camera to collect a face image of a current user via the face recognition service in response to detecting a face recognition request for a target event.

At block S302, the mobile terminal determines the collected face image is a real face image of the current user.

At block S303, the mobile terminal extracts face feature data of the real face image of the current user via the face recognition service.

At block S304, the mobile terminal sends the face feature data to the face recognition trusted application via the face recognition service.

At block S305, the mobile terminal matches the face feature data with a face template in a face template set of the security system via the face recognition trusted application so as to generate a matching result.

At block S306, the mobile terminal processes the target event according to the matching result.

In embodiments of the present disclosure, the mobile terminal acquires face feature data of a face image of a current user via face recognition service in response to detecting a face recognition request for a target event, sends the face feature data to a face recognition trusted application via the face recognition service, matches the face feature data with a face template in a face template set of a security system via the face recognition trusted application to generate a matching result and processes the target event according to the matching result. Since running environment of the face recognition trusted application in the security system has higher security relative to face recognition service in the operating system, the matching process of face feature data is realized by the face recognition trusted application, such that situations in which the matching result is tampered during the matching process performed by the face recognition service of the operating system or data such as a face template is stolen can be avoided, thereby improving security of face recognition of the mobile terminal.

Further, since the mobile terminal performs bioassay on the collected face image before extracting the face feature data and performs the feature data extraction in response to determining the collected face image is a real face image of the current user, the invalid face recognition using fake photos can be avoided, thereby improving security of face recognition of the mobile terminal.

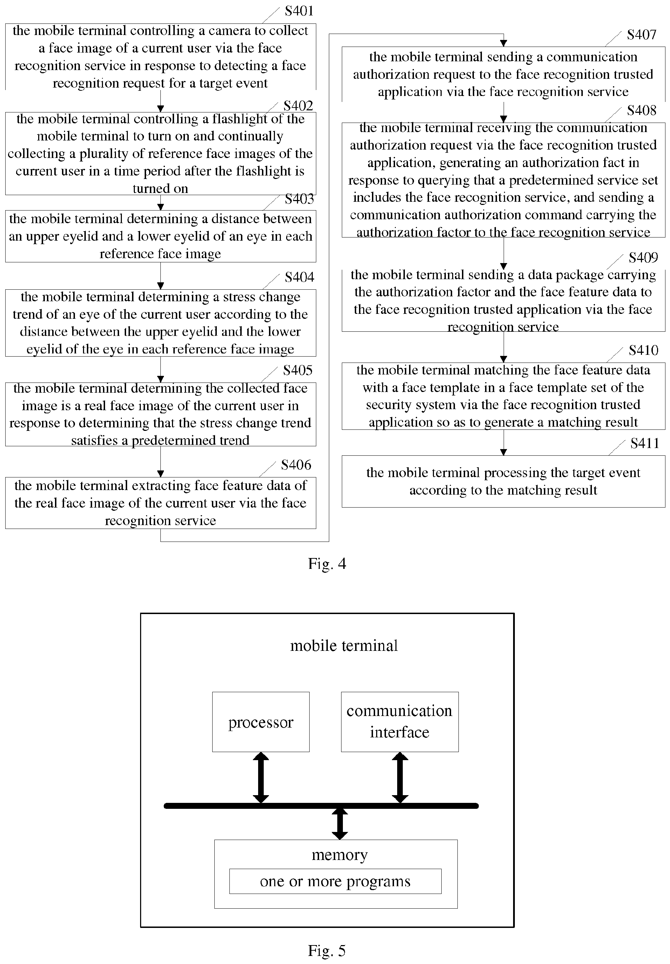

Similar to embodiments illustrated in Fig. 2A, referring to Fig. 4, Fig. 4 is a flow chart of a face recognition method according to an embodiment of the present disclosure. The method is applicable to a mobile terminal. The mobile terminal runs an operating system and a security system. Face recognition service is running in the operating system, and a face recognition trusted application TA is running in the security system. As illustrated in Fig. 4, the method includes the followings.

At block S401, the mobile terminal controls a camera to collect a face image of a current user via the face recognition service in response to detecting a face recognition request for a target event.

At block S402, the mobile terminal controls a flashlight of the mobile terminal to turn on and continually collects a plurality of reference face images of the current user in a time period after the flashlight is turned on.

At block S403, the mobile terminal determines a distance between an upper eyelid and a lower eyelid of an eye in each reference face image.

At block S404, the mobile terminal determines a stress change trend of an eye of the current user according to the distance between the upper eyelid and the lower eyelid of the eye in each reference face image.

At block S405, the mobile terminal determines the collected face image is a real face image of the current user in response to determining that the stress change trend satisfies a predetermined trend.

At block S406, the mobile terminal extracts face feature data of the real face image of the current user via the face recognition service.

At block S407, the mobile terminal sends a communication authorization request to the face recognition trusted application via the face recognition service.

At block S408, the mobile terminal receives the communication authorization request via the face recognition trusted application, generates an authorization fact in response to querying that a predetermined service set includes the face recognition service, and sends a communication authorization command carrying the authorization factor to the face recognition service. The authorization factor is configured to verify validity of communication between the face recognition service and the face recognition trusted application.

At block S409, the mobile terminal sends a data package carrying the authorization factor and the face feature data to the face recognition trusted application via the face recognition service.

At block S4010, the mobile terminal matches the face feature data with a face template in a face template set of the security system via the face recognition trusted application so as to generate a matching result.

At block S4011, the mobile terminal processes the target event according to the matching result.

In embodiments of the present disclosure, the mobile terminal acquires face feature data of a face image of a current user via face recognition service in response to detecting a face recognition request for a target event, sends the face feature data to a face recognition trusted application via the face recognition service, matches the face feature data with a face template in a face template set of a security system via the face recognition trusted application to generate a matching result and processes the target event according to the matching result. Since running environment of the face recognition trusted application in the security system has higher security relative to face recognition service in the operating system, the matching process of face feature data is realized by the face recognition trusted application, such that situations in which the matching result is tampered during the matching process performed by the face recognition service of the operating system or data such as a face template is stolen can be avoided, thereby improving security of face recognition of the mobile terminal.

Further, since the mobile terminal performs bioassay on the collected face image before extracting the face feature data and performs the feature data extraction in response to determining the collected face image is a real face image of the current user, the invalid face recognition using fake photos can be avoided, thereby improving security of face recognition of the mobile terminal.

Moreover, since the flashlight motivates the stress response of human eyes, change in content of the images collected continuously by the mobile terminal occurs. However, in the invalid recognition using photos, there is no change in the content of the images collected continuously by the mobile terminal as the flashlight is turned on. Therefore, the face recognition of the real user can be recognized, which improves security of face recognition of the mobile terminal.

Furthermore, the mobile terminal can actually recognize the face recognition of real user by comparing the stress change trend with the predetermined trend, such that the security of face recognition can be improved.

In addition, since the authorization factor can effectively ensure security of communication between the face recognition service in the operating system and the face recognition trusted application in the security system, the security of face recognition of the mobile terminal can be improved.

Similar to embodiments illustrated in Fig. 2A, Fig. 3 and Fig. 4, referring to Fig. 5, Fig. 5 is a schematic diagram of a mobile terminal according to an embodiment of the present disclosure. As illustrated in Fig. 5, the mobile terminal includes a processor, a memory, a communication interface and one or more programs. The one or more programs are stored in the memory, and are configured to be executed by the processor. The one or more programs include instructions for performing the followings: acquiring face feature data of a face image of a current user via the face recognition service in response to detecting a face recognition request for a target event; sending the face feature data to the face recognition trusted application via the face recognition service; matching the face feature data with a face template in a face template set of the security system via the face recognition trusted application so as to generate a matching result; and processing the target event according to the matching result.

In embodiments of the present disclosure, the mobile terminal acquires face feature data of a face image of a current user via face recognition service in response to detecting a face recognition request for a target event, sends the face feature data to a face recognition trusted application via the face recognition service, matches the face feature data with a face template in a face template set of a security system via the face recognition trusted application to generate a matching result and processes the target event according to the matching result. Since running environment of the face recognition trusted application in the security system has higher security relative to face recognition service in the operating system, the matching process of face feature data is realized by the face recognition trusted application, such that situations in which the matching result is tampered during the matching process performed by the face recognition service of the operating system or data such as a face template is stolen can be avoided, thereby improving security of face recognition of the mobile terminal.

In a possible embodiment, when acquiring the face feature data of the face image of the current user via the face recognition service, the instructions in the one or more programs are configured to perform the followings: controlling a camera to collect the face image of the current user via the face recognition service; determining the collected face image is a real face image of the current user; and extracting face feature data of the real face image of the current user via the face recognition service.

In a possible embodiment, when determining the collected face image is a real face image of the current user, the instructions in the one or more programs are configured to perform the followings: controlling a flashlight of the mobile terminal to turn on and continuously collecting a plurality of reference face images of the current user in a predetermined time period after the flashlight is turned on; and determining the collected face image is a real face image of the current user according to the plurality of reference face images.

In a possible embodiment, when determining the collected face image is a real face image of the current user according to the plurality of reference face images, the instructions in the one or more programs are configured to perform the followings: determining a distance between an upper eyelid and a lower eyelid of an eye in each reference face image; determining a stress change trend of an eye of the current user according to the distance between the upper eyelid and the lower eyelid of the eye in each reference face image; and determining the collected face image is a real face image of the current user in response to determining that the stress change trend satisfies a predetermined trend.

In a possible embodiment, when sending the face feature data to the face recognition trusted application via the face recognition service, the instructions in the one or more programs are configured to perform the followings: sending a communication authorization request to the face recognition trusted application via the face recognition service; receiving the communication authorization request via the face recognition trusted application, generating an authorization factor in response to querying that a predetermined service set includes the face recognition service, and sending a communication authorization command carrying the authorization factor to the face recognition service, the authorization factor being configured to verify validity of communication between the face recognition service and the face recognition trusted application; and sending a data package carrying the authorization factor and the face feature data to the face recognition trusted application via the face recognition service.

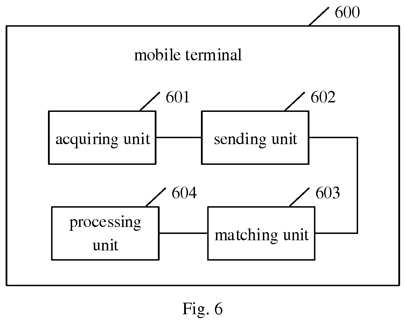

Similar to the aforementioned embodiments, Fig. 6 is a block diagram of a mobile terminal according to an embodiment of the present disclosure. The mobile terminal runs an operating system and a security system. Face recognition service is running in the operating system, and a face recognition trusted application TA is running in the security system. The mobile terminal 600 includes an acquiring unit 601, a sending unit 602, a matching unit 603 and a processing unit 604.

The acquiring unit 601 is configured to acquire face feature data of a face image of a current user via the face recognition service in response to detecting a face recognition request for a target event.

The sending unit 602 is configured to send the face feature data to the face recognition trusted application via the face recognition service.

The matching unit 603 is configured to match the face feature data with a face template in a face template set of the security system via the face recognition trusted application so as to generate a matching result.

The processing unit 604 is configured to process the target event according to the matching result.

In embodiments of the present disclosure, the mobile terminal acquires face feature data of a face image of a current user via a face recognition service in response to detecting a face recognition request for a target event, sends the face feature data to a face recognition trusted application via the face recognition service, matches the face feature data with a face template in a face template set of a security system via the face recognition trusted application to generate a matching result and processes the target event according to the matching result. Since running environment of the face recognition trusted application in the security system has higher security relative to face recognition service in the operating system, the matching process of face feature data is realized by the face recognition trusted application, such that situations in which the matching result is tampered during the matching process performed by the face recognition service of the operating system or data such as a face template is stolen can be avoided, thereby improving security of face recognition of the mobile terminal.

In a possible embodiment, when acquiring the face feature data of the face image of the current user via the face recognition service, the acquiring unit 601 is configured to: control a camera to collect the face image of the current user via the face recognition service; determine the collected face image is a real face image of the current user; and extract face feature data of the real face image of the current user via the face recognition service.

In a possible embodiment, when determining the collected face image is a real face image of the current user, the acquiring unit 601 is configured to: control a flashlight of the mobile terminal to turn on and continuously collect a plurality of reference face images of the current user in a predetermined time period after the flashlight is turned on; and determine the collected face image is a real face image of the current user according to the plurality of reference face images.

In a possible embodiment, when determining the collected face image is a real face image of the current user according to the plurality of reference face images, the acquiring unit 601 is configured to: determine a distance between upper an eyelid and a lower eyelid of an eye in each reference face image; determine a stress change trend of an eye of the current user according to the distance between the upper eyelid and the lower eyelid of the eye in each reference face image; and determine the collected face image is a real face image of the current user in response to determining that the stress change trend satisfies a predetermined trend.

In a possible embodiment, when sending the face feature data to the face recognition trusted application via the face recognition service, the sending unit 602 is configured to: send a communication authorization request to the face recognition trusted application via the face recognition service; receive the communication authorization request via the face recognition trusted application, generate an authorization factor in response to querying that a predetermined service set includes the face recognition service, and send a communication authorization command carrying the authorization factor to the face recognition service, the authorization factor being configured to verify validity of communication between the face recognition service and the face recognition trusted application; and send a data package carrying the authorization factor and the face feature data to the face recognition trusted application via the face recognition service.

It should be noted that, the mobile terminal in the embodiments of the present disclosure is presented in the form of functional units. The term "unit" used herein should be taken in the broadest possible sense. The functional object for implanting respective "unit", for example, may be an application specific integrated circuit (ASIC), a single circuit, a processor (general, specific or chipset) for executing one or more software or firmware programs and a memory, a combinational logic circuit, and/or other suitable components capable of realizing the abovementioned functions.

The acquiring unit 601 and the sending unit 602 may be a communication interface. The matching unit 603 and the processing unit 604 may be a processor or a controller.

Embodiments of the present disclosure also provide a computer storage medium having computer programs for exchanging digital data stored thereon, in which the computer programs are executed to perform all or a part of acts of the method according to the above method embodiments of the present disclosure. The computer includes a mobile terminal.

Embodiments of the present disclosure also provide a computer program product including a non-transitory computer-readable storage medium storing computer programs, in which the computer programs are executed to perform all or a part of acts of the method according to the above method embodiments of the present disclosure. The computer program product may be a software installation package. The computer includes a mobile terminal.

It should be noted that, for convenience and simplicity of description, the above method embodiments are described in a form of a combination of a series of steps. However, those skilled in the art can understand clearly that, the present disclosure is not limited by the order of the steps, since some steps may be performed simultaneously or in other orders according to present disclosure. In addition, those skilled in the art can understand clearly that, the described embodiments are preferred embodiments, of which relative steps or modules may be unnecessary for the present disclosure.

In above embodiments, each embodiment may be described with focusing on different aspects. Parts not be described in some embodiments may refer to relative descriptions in other embodiments.

It should be understood that, the apparatus disclosed in several embodiments provided by the present disclosure can be realized in any other manner. For example, the apparatus embodiments described above can be merely exemplary, for example, the units are just divided according to logic functions. In practical implementation, the units can be divided in other manners, for example, multiple units or components can be combined or integrated into another system, or some features can be omitted or not executed. In addition, the mutual coupling or direct coupling or communication connection described or discussed can be via some interfaces, and indirect coupling or communication connection between devices or units may be electrical, mechanical or of other forms.

The units illustrated as separate components can be or not be separated physically, and components described as units can be or not be physical units, i.e., can be located at one place, or can be distributed onto multiple network units. It is possible to select some or all of the units according to actual needs, for realizing the objective of embodiments of the present disclosure.

In addition, respective functional units in respective embodiments of the present disclosure can be integrated into one processing unit, or can be present as separate physical entities. It is also possible that two or more than two units are integrated into one unit. The integrated units may be implemented in form of hardware, or in form of functional software units.

If the integrated unit is implemented in form of functional software units and are sold or used as separate products, it can be stored in a computer readable storage medium. Based on this understanding, the parts of the technical solutions or the essential parts of the technical solutions (i.e. the parts making a contribution to the related art) can be embodied in form of software product, which is stored in a storage medium, and includes several instruction used for causing a computer device (for example, a personal computer, a server or a network device) to execute all or part of steps in the methods described in respective embodiments of the present disclosure. The above storage medium may be any medium capable of storing program codes, including a USB flash disk, a mobile hard disk, a Read-Only Memory (ROM), a Random Access Memory (RAM), a disc, or an optical disk.

It should be understood that all or a part of the method provided by the present disclosure may be realized by programs instructing relative hardware, the programs may be stored in a computer-readable memory. The memory may include a flash disk, an ROM, an RAM, a magnet disk, an optical disk and the like.

The forgoing description is only directed to preferred embodiments of the present disclosure, but not used to limit the present disclosure.

## Claims

1. A mobile terminal (100), an operating system and a security system running in the mobile terminal (100), a face recognition service running in the operating system, a face recognition trusted application running in the security system, the mobile terminal (100) comprising a processor (110), a face image collection device (130) and a memory (120) coupled to the processor (110), wherein,
the face image collection device (130) is configured to collect a face image of a current user; the memory (120) is configured to store a face template set of the security system; and
the processor (110) is configured to perform following operations:
acquiring face feature data of the face image via the face recognition service, in response to detecting a face recognition request for a target event;
sending the face feature data to the face recognition trusted application via the face recognition service;
matching the face feature data with a face template in the face template set via the face recognition trusted application, so as to generate a matching result; and
processing the target event according to the matching result.

2. The mobile terminal (100) according to claim 1, wherein acquiring the face feature data of the face image via the face recognition service comprises:
controlling, via the face recognition service, a camera to collect the face image of the current user;
determining the collected face image is a real face image of the current user; and
extracting, via the face recognition service, the face feature data of the real face image of the current user.

3. The mobile terminal (100) according to claim 2, wherein determining the collected face image is a real face image of the current user, the processor (110) comprises:
controlling a flashlight of the mobile terminal (100) to turn on;
continuously collecting a plurality of reference face images of the current user in a predetermined time period after the flashlight is turned on; and
determining the collected face image is a real face image of the current user according to the plurality of reference face images.

4. The mobile terminal (100) according to claim 3, wherein determining the collected face image is a real face image of the current user according to the plurality of reference face images comprises:
determining a distance between an upper eyelid and a lower eyelid of an eye in each reference face image;
determining a stress change trend of the eye of the current user according to the distance between the upper eyelid and the lower eyelid of the eye in each reference face image; and
determining the collected face image is a real face image of the current user when the stress change trend satisfies a predetermined trend.

5. The mobile terminal (100) according to claim 4, wherein the predetermined trend comprises a trend of squint or a trend of closing eyes.

6. The mobile terminal (100) according to any of claims 1-5, wherein sending the face feature data to the face recognition trusted application via the face recognition service comprises:
sending, via the face recognition service, a communication authorization request to the face recognition trusted application;
receiving, via the face recognition trusted application, the communication authorization request;
generating an authorization factor in response to querying that a predetermined service set includes the face recognition service;
sending a communication authorization command carrying the authorization factor to the face recognition service, wherein the authorization factor is configured to verify validity of communication between the face recognition service and the face recognition trusted application; and
sending, via the face recognition service, a data package carrying the authorization factor and the face feature data to the face recognition trusted application.

7. The mobile terminal (100) according to any of claims 1-6, wherein the operating system corresponds to a rich execution environment, and the security system corresponds to a trust execution environment.

8. A face recognition method, applicable to a mobile terminal (100), an operating system and a security system running in the mobile terminal (100), a face recognition service running in the operating system and a face recognition trusted application running in the security system, the method comprising:
acquiring (S201), via the face recognition service, face feature data of a face image of a current user in response to detecting a face recognition request for a target event;
sending (S202, S304), via the face recognition service, the face feature data to the face recognition trusted application;
matching (S203, S305, S410), via the face recognition trusted application, the face feature data with a face template in a face template set of the security system so as to generate a matching result; and
processing (S204, S306, S411) the target event according to the matching result.

9. The method according to claim 8, wherein acquiring (S201), via the face recognition service, the face feature data of the face image of the current user comprises:
controlling (S301, S401), via the face recognition service, a camera to collect the face image of the current user;
determining (S302) the collected face image is a real face image of the current user; and
extracting (S303, S406), via the face recognition service, the face feature data of the real face image of the current user.

10. The method according to claim 9, wherein determining (S302) the collected face image is a real face image of the current user comprises:
controlling (S402) a flashlight of the mobile terminal (100) to turn on;
continuously collecting (S402) a plurality of reference face images of the current user in a predetermined time period after the flashlight is turned on; and
determining the collected face image is real face image of the current user according to the plurality of reference face images.

11. The method according to claim 10, wherein determining the collected face image as the real face image of the current user according to the plurality of reference face images comprises:
determining (S403) a distance between an upper eyelid and a lower eyelid of an eye in each reference face image;
determining (S404) a stress change trend of the eye of the current user according to the distance between the upper eyelid and the lower eyelid of the eye in each reference face image; and
determining (S405) the collected face image is a real face image of the current user in response to determining that the stress change trend satisfies a predetermined trend.

12. The method according to claim 11, wherein the predetermined trend comprises a trend of squint or a trend of closing eyes.

13. The method according to any of claims 8-12, wherein sending (S202, S304), via the face recognition service, the face feature data to the face recognition trusted application comprises:
sending (S407), via the face recognition service, a communication authorization request to the face recognition trusted application;
receiving (S408), via the face recognition trusted application, the communication authorization request;
generating (S408) an authorization factor in response to querying that a predetermined service set includes the face recognition service;
sending (S408) a communication authorization command carrying the authorization factor to the face recognition service, wherein the authorization factor is configured to verify validity of communication between the face recognition service and the face recognition trusted application; and
sending (S409), via the face recognition service, a data package carrying the authorization factor and the face feature data to the face recognition trusted application.

14. The method according to any of claims 8-13, wherein the operating system corresponds to a rich execution environment, and the security system corresponds to a trust execution environment.

15. A non-transitory computer-readable storage medium, having a computer program for electronic data exchange stored thereon, wherein the computer program causes a computer to perform a face recognition method according to any of claims 8-14, wherein the computer comprises a mobile terminal (100) an operating system and a security system running in the mobile terminal (100), a face recognition service running in the operating system and a face recognition trusted application running in the security system.
